# EUROPEAN PATENT APPLICATION

(11) **EP 4 349 739 A1**
(43) Date of publication of application: **10.04.2024**
(21) Application number: 22810974.0
(22) Date of filing: 24.03.2022
(51) Int. Cl.: B65G 1/04, B65G 1/00, B65G 1/10, B65G 1/137

(54) **TAKE-OUT DEVICE, TAKE-OUT SYSTEM, AND TRANSPORT SHELF**

(30) Priority: 26.05.2021 JP 2021088657
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: YABE, Yosuke, Kawasaki-shi, Kanagawa 212-0013 (JP); WATANABE, Tetsuo, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2022/013919
(87) International publication number: WO 2022/249698

(57) **Abstract**

According to an embodiment, a taking-out apparatus includes a holding portion, a moving apparatus, a lifting apparatus, and a housing. The holding portion is configured to be accommodated in a conveyance shelf and is configured to hold an accommodation box that accommodates an article. The moving apparatus is configured to move the holding portion in a uniaxial direction intersecting a vertical direction. The lifting apparatus is configured to move the holding portion and the moving apparatus in the vertical direction. The housing supports the holding portion, the moving apparatus, and the lifting apparatus.

## Description

### FIELD

Embodiments described herein relate to a taking-out apparatus, a taking-out system, and a conveyance shelf.

### BACKGROUND

Conventionally, there has been known a technique in which a conveyance shelf accommodating an article such as a cargo is moved by an automatic guided vehicle to a taking-out position where the article is taken out, and the article is taken out from the conveyance shelf by human work.

### CITATION LIST

### PATENT LITERATURE

Patent Literature 1: Jpn. Patent No. 4423616

### SUMMARY

### TECHNICAL PROBLEM

A problem to be solved by the present invention is to provide a taking-out apparatus, a taking-out system, and a conveyance shelf capable of using a picking robot for conveying an article from the conveyance shelf to a conveyance destination.

### Solution to Problem

According to an embodiment, a taking-out apparatus includes a holding portion, a moving apparatus, a lifting apparatus, and a housing. The holding portion is configured to be accommodated in a conveyance shelf and is configured to hold an accommodation box that accommodates an article. The moving apparatus is configured to move the holding portion in a uniaxial direction intersecting a vertical direction. The lifting apparatus is configured to move the holding portion and the moving apparatus in the vertical direction. The housing supports the holding portion, the moving apparatus, and the lifting apparatus.

### BRIEF DESCRIPTION OF THE DRAWINGS

FIG. 1 is a schematic view illustrating a taking-out system according to a first embodiment.
FIG. 2 is a schematic view illustrating a station and a conveyance shelf of the taking-out system according to the first embodiment.
FIG. 3 is a side view illustrating a taking-out apparatus and the conveyance shelf of the taking-out system according to the first embodiment.
FIG. 4 is a rear view illustrating the taking-out apparatus of the taking-out system according to the first embodiment.
FIG. 5 is a perspective view illustrating the taking-out apparatus of the taking-out system according to the first embodiment.
FIG. 6 is a block diagram illustrating an electrical configuration of the taking-out system according to the first embodiment.
FIG. 7 is a cross-sectional view illustrating a configuration of the conveyance shelf of the taking-out system according to the first embodiment.
FIG. 8 is a front view illustrating the conveyance shelf of the taking-out system according to the first embodiment.
FIG. 9 is a time chart illustrating an operation of the taking-out system according to the first embodiment.
FIG. 10 is a flowchart illustrating the operation of the taking-out system according to the first embodiment.
FIG. 11 is a schematic view illustrating a station and a conveyance shelf of a taking-out system according to a second embodiment.
FIG. 12 is a time chart illustrating an operation of the taking-out system according to the second embodiment.
FIG. 13 is a side view illustrating a modification of a taking-out apparatus of the taking-out system according to the first embodiment and the second embodiment.
FIG. 14 is a side view illustrating the modification of the taking-out apparatus of the taking-out system according to the first embodiment and the second embodiment.
FIG. 15 is a side view illustrating the modification of the taking-out apparatus of the taking-out system according to the first embodiment and the second embodiment.
FIG. 16 is a cross-sectional view illustrating a modification of a conveyance shelf of the taking-out system according to the first embodiment and the second embodiment.
FIG. 17 is a front view illustrating the conveyance shelf illustrated in FIG. 16.
FIG. 18 is a cross-sectional view illustrating the modification of the conveyance shelf of the taking-out system according to the first embodiment and the second embodiment.
FIG. 19 is a front view illustrating the conveyance shelf illustrated in FIG. 18.
FIG. 20 is a front view illustrating the modification of the conveyance shelf of the taking-out system according to the first embodiment and the second embodiment.
FIG. 21 is a schematic view illustrating a modification of the taking-out system of the first embodiment.
FIG. 22 is a schematic view illustrating a modification of the taking-out system of the second embodiment.

### DETAILED DESCRIPTION

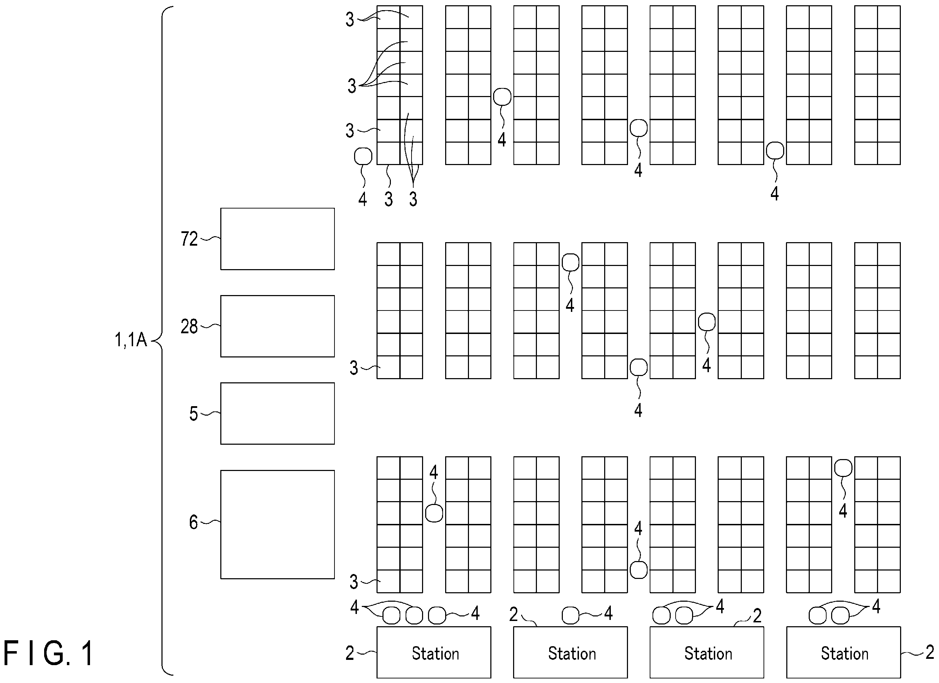

A taking-out system 1 according to a first embodiment will be described with reference to FIGS. 1 to 10.

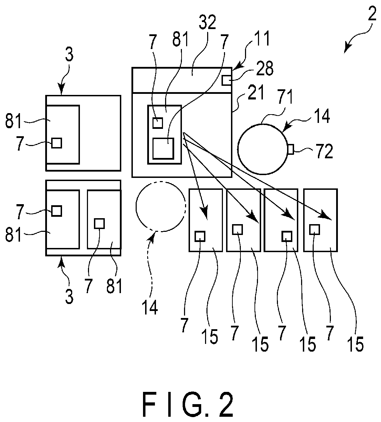

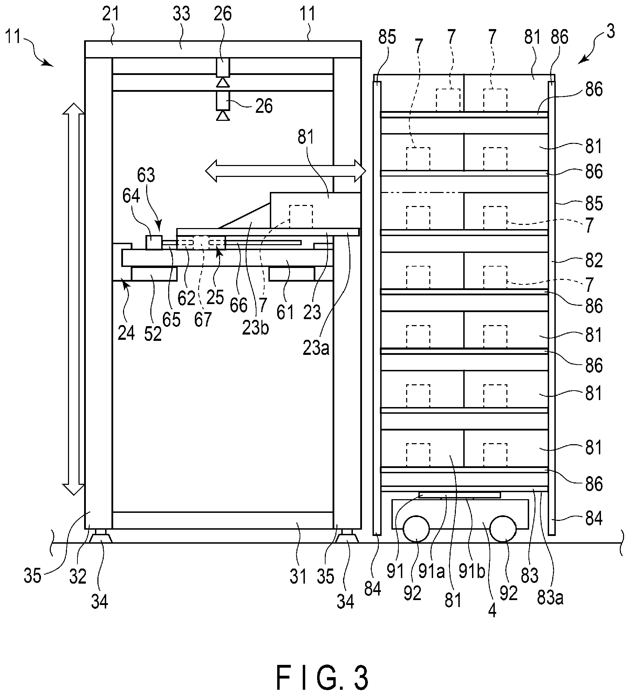

FIG. 1 is a schematic view illustrating the taking-out system 1. FIG. 2 is a schematic view illustrating a station 2 and a conveyance shelf 3 of the taking-out system 1. FIG. 3 is a side view illustrating a taking-out apparatus 11 and the conveyance shelf 3 of the taking-out system 1. Here, the side view is a view seen from the side with respect to a direction in which an accommodation box 81 is taken out by the taking-out apparatus 11.

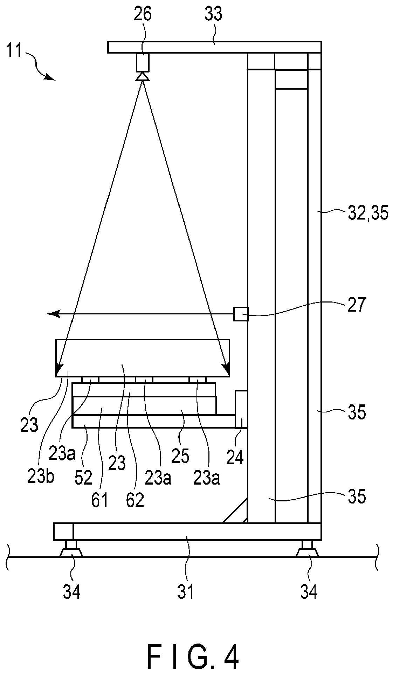

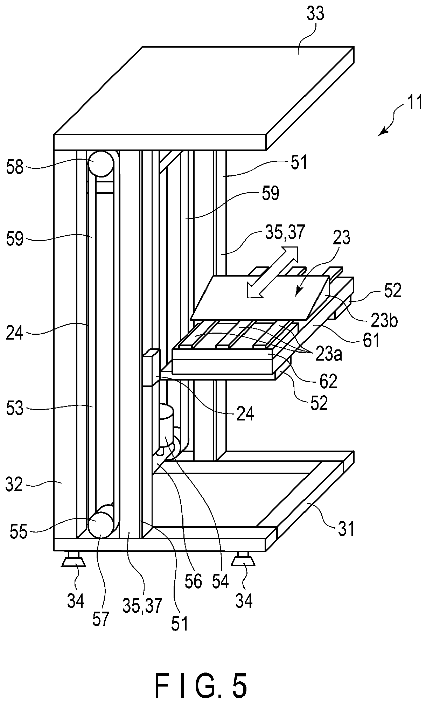

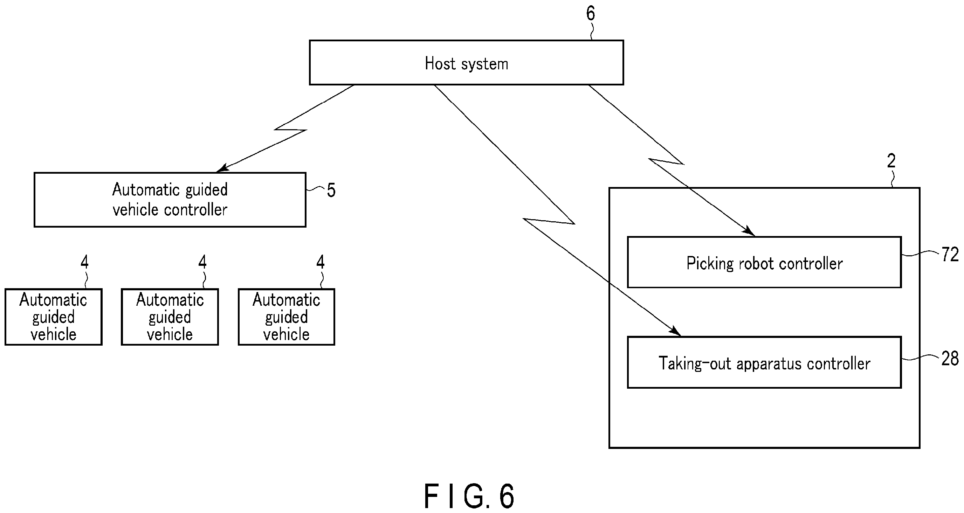

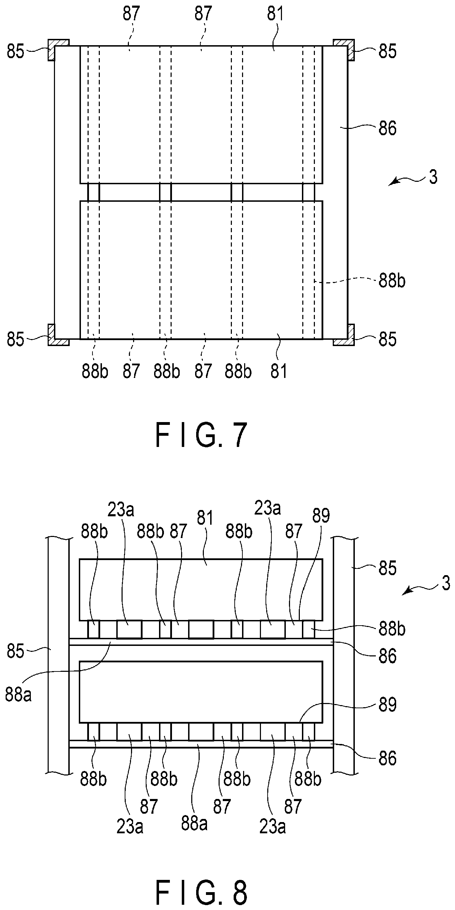

FIG. 4 is a rear view illustrating the taking-out apparatus 11. Here, the rear view of the taking-out apparatus 11 is a rear view when a direction from a moving apparatus 25 of the taking-out apparatus 11 to the conveyance shelf 3 is defined as a front direction. FIG. 5 is a perspective view illustrating the taking-out apparatus 11. FIG. 6 is a block diagram illustrating an electrical configuration of the taking-out system 1. FIG. 7 is a cross-sectional view illustrating a configuration of the conveyance shelf 3. Here, the cross-sectional view of the conveyance shelf 3 is a cross-sectional view obtained by cutting the conveyance shelf 3 along a cross section orthogonal to a vertical direction between two shelf plate portions 86 lined up in the vertical direction. FIG. 8 is a front view illustrating the conveyance shelf 3.

As illustrated in FIG. 1, the taking-out system 1 includes, for example, a plurality of stations 2, a plurality of conveyance shelves 3, a plurality of automatic guided vehicles 4, an automatic guided vehicle controller 5, and a host system 6.

The taking-out system 1 moves one selected conveyance shelf 3 among the plurality of conveyance shelves 3 to the station 2 using one automatic guided vehicle 4. As illustrated in FIG. 2, in the taking-out system 1, the taking-out apparatus 11 of the station 2 takes out the accommodation box 81 accommodating an article 7 from the conveyance shelf 3, and a picking robot system 14 of the station 2 takes out the article 7 accommodated in the accommodation box 81 and conveys the article 7 to the conveyance destination.

The article 7 is, for example, a cargo. The taking-out system 1 can be used, for example, to move the article 7 accommodated in the plurality of conveyance shelves 3 to a sorting box 15 corresponding to the article 7 in the station 2. The sorting box 15 is an example of the conveyance destination to which the article 7 is conveyed by a picking robot 71 to be described later of the picking robot system 14. In the present embodiment, an example in which the article 7 is conveyed to the sorting box 15 will be described.

As illustrated in FIG. 2, the station 2 includes, for example, a taking-out apparatus 11, the picking robot system 14, and a plurality of sorting boxes 15. The station 2 is configured by installing the taking-out apparatus 11, the picking robot system 14, and the plurality of sorting boxes 15 in a predetermined area of a floor such as in a warehouse. Note that FIG. 2 illustrates, as an example, a state in which the conveyance shelf 3 from which the article 7 is taken out and the conveyance shelf 3 from which the article 7 is taken out next have been moved to the station 2.

As illustrated in FIGS. 3 to 5, the taking-out apparatus 11 is configured to be able to take out, from the conveyance shelf 3, the accommodation box 81 accommodating the article 7 to be taken out among the plurality of accommodation boxes 81 of the conveyance shelf 3. Here, in a case where the article 7 is taken out from the accommodation box 81, the accommodation box 81 is arranged at a predetermined position. The predetermined position is a position where the article 7 can be taken out from the accommodation box 81 by the picking robot 71 of the picking robot system 14.

The taking-out apparatus 11 includes, for example, a housing 21, a holding portion 23, a lifting apparatus 24, a moving apparatus 25, a camera 26, a sensor 27, and a taking-out apparatus controller 28 (see FIG. 2).

Here, examples of a vertical direction, a longitudinal direction, and a width direction of the taking-out apparatus 11 are defined. The vertical direction is set by defining the gravity direction as a downward direction, the longitudinal direction is set by defining a direction orthogonal to the vertical direction and directed from the taking-out apparatus 11 to the conveyance shelf 3 as a front direction, and a direction orthogonal to both the vertical direction and the longitudinal direction is set as the width direction.

The housing 21 supports the holding portion 23, the lifting apparatus 24, and the moving apparatus 25. The housing 21 includes, for example, a bottom portion 31, a column portion 32, and a ceiling portion 33.

As illustrated in FIG. 5, the bottom portion 31 is formed in, for example, a rectangular frame shape. The bottom portion 31 is provided with, for example, a plurality of leg portions 34. In the present embodiment, for example, each of the four leg portions 34 is fixed to a corner portion of the lower surface of the bottom portion 31.

The column portion 32 is provided on the bottom portion 31. The column portion 32 includes, for example, four column members 35. Two column members 35 are fixed to, for example, a pair of adjacent corner portions of the bottom portion 31. The remaining two column members 35 are fixed, for example, on a corner portion side to which the column member 35 is fixed, between a corner portion of the bottom portion 31 to which the column member 35 is fixed and a corner portion adjacent to the corner portion.

The ceiling portion 33 is fixed to the upper end of the column portion 32. The ceiling portion 33 is configured to be able to support the camera 26. The ceiling portion 33 is formed in, for example, a plate shape.

The holding portion 23 detachably holds the accommodation box 81 accommodated in the conveyance shelf 3. The accommodation box 81 accommodates the article 7. In the example of the present embodiment, as illustrated in FIG. 5, the holding portion 23 includes one or a plurality of arms 23a and a stopper 23b. When the accommodation box 81 is placed on the arm 23a, the holding portion 23 holds the accommodation box 81.

The number of arms 23a capable of stably holding the lower surface of the accommodation box 81 is used, and three arms are provided in the example of the present embodiment. The arm 23a is formed in, for example, a rod shape that is long in the longitudinal direction. The three arms 23a are arranged apart from each other in the width direction. The upper surface of the arm 23a is formed in, for example, a flat surface, and the cross section orthogonal to the longitudinal direction of the arm 23a is formed in, for example, a rectangular shape. Here, the number capable of stably holding the lower surface of the accommodation box 81 is a number with which the accommodation box 81 does not fall from the arm 23a even when the holding portion 23 is lifted and lowered by the lifting apparatus 24 and moved by the moving apparatus 25 in a state where the accommodation box 81 is placed on the arm 23a. In the example of the present embodiment, the two arms 23a on the outer side in the width direction support both ends in the width direction of the lower surface of the accommodation box 81, and the arm 23a at the center in the width direction supports the center in the width direction of the lower surface of the accommodation box 81.

The stopper 23b is configured to be able to make contact with a surface of the accommodation box 81 facing the taking-out apparatus 11 when the holding portion 23 is moved forward by the moving apparatus 25. The stopper 23b is fixed to the upper surface of the arm 23a, for example. The front surface of the stopper 23b is formed in, for example, a flat surface orthogonal to the longitudinal direction.

The length in the longitudinal direction of the portion of the holding portion 23 configured as described above in front of the stopper 23b fixed on the arm 23a has a length with which the accommodation box 81 can be stably placed on the front portion. Here, the length with which the accommodation box 81 can be stably placed is a length with which the accommodation box 81 does not fall even when the holding portion 23 is moved by the lifting apparatus 24 and the moving apparatus 25.

The lifting apparatus 24 moves the holding portion 23 and the moving apparatus 25 in the vertical direction. The lifting apparatus 24 is configured to be able to lift and lower the holding portion 23 and the moving apparatus 25 between a position where the holding portion 23 takes out the lowermost accommodation box 81 of the conveyance shelf 3 and a position where the holding portion 23 takes out the uppermost accommodation box 81 of the conveyance shelf 3. In addition, the lifting apparatus 24 is configured to be able to move the accommodation box 81 taken out from the conveyance shelf 3 by the holding portion 23 and the moving apparatus 25 to a pick height. The pick height is a height position at which the article 7 is taken out from the accommodation box 81 by the picking robot 71. The pick height is a height position set by the picking robot 71. The lifting apparatus 24 is provided on the housing 21. The lifting apparatus 24 includes, for example, a rail 51, a lifting portion 52, and a driving portion 53.

The rail 51 supports the lifting portion 52 so as to be movable in the vertical direction. The rail 51 is provided on, for example, the column portion 32 of the housing 21. The rail 51 is provided on, for example, a respective one of two column members 35 lined up in the width direction.

The lifting portion 52 is supported so as to be movable in the vertical direction with respect to the rail 51. For example, one lifting portion 52 is provided on each of the two rails 51.

The driving portion 53 is configured to be able to move the lifting portion 52 in the vertical direction. The driving portion 53 includes, for example, a motor 54 and a transmission mechanism 55.

The motor 54 is fixed, for example, between two column members 35 at the back end of the bottom portion 31. The motor 54 is electrically connected to the taking-out apparatus controller 28.

The transmission mechanism 55 is configured to be able to convert the rotation of the motor 54 into vertical movement of the lifting portion 52. The transmission mechanism 55 includes, for example, a shaft portion 56 that is engaged with an output shaft of the motor 54 and rotates with the rotation of the output shaft, a pair of first pulleys 57, a pair of second pulleys 58, and a pair of belts 59.

The shaft portion 56 is rotatably supported by the bottom portion 31 in a posture parallel to the width direction, for example. The pair of first pulleys 57 is fixed to both ends of the shaft portion 56 and rotates integrally with the shaft portion 56. The pair of second pulleys 58 is rotatably supported by the ceiling portion 33, for example. The pair of second pulleys 58 is arranged at, for example, a position facing the pair of first pulleys 57 in the vertical direction.

A pair of belts 59 is wound around the first pulley 57 and the second pulley 58. The pair of belts 59 is fixed to the lifting portion 52.

According to the driving portion 53 configured as described above, the pair of first pulleys 57, the pair of second pulleys 58, and the pair of belts 59 rotate with the rotation of the motor 54, whereby the holding portion 23 and the moving apparatus 25 move in the vertical direction via the lifting portion 52 fixed to the pair of belts 59.

The moving apparatus 25 moves the holding portion 23 in one axial direction intersecting the vertical direction. In the example of the present embodiment, the moving apparatus 25 moves the holding portion 23 in the longitudinal direction orthogonal to the vertical direction. In addition, the moving apparatus 25 moves the holding portion 23 in the longitudinal direction between a position where the holding portion 23 holds the accommodation box 81 accommodated in the conveyance shelf 3 and a position where the taking-out of the accommodation box 81 is completed. The position where the accommodation box 81 is held is, for example, a position where the stopper 23b makes contact with the accommodation box 81. The position where the taking-out of the accommodation box 81 has been completed is a position where the article 7 in the accommodation box 81 can be taken out by the picking robot 71 in the longitudinal direction.

The moving apparatus 25 includes, for example, a base portion 61, a moving portion 62, and a driving portion 63.

The base portion 61 supports the moving portion 62 so as to be movable in the longitudinal direction. The base portion 61 is fixed to two lifting portions 52 of the lifting apparatus 24.

The holding portion 23 is fixed to the moving portion 62. The moving portion 62 is supported by the base portion 61 so as to be movable in the longitudinal direction by, for example, the transmission mechanism 65 to be described later of the driving portion 63. Note that a rail that supports the movement of the moving portion 62 in the longitudinal direction may be provided on the upper surface of the base portion 61.

The driving portion 63 includes a motor 64 and a transmission mechanism 65.

The motor 64 is provided, for example, on the base portion 61. The motor 64 is electrically connected to the taking-out apparatus controller 28.

The transmission mechanism 65 is configured to be able to convert the rotation of the motor 64 into the movement of the moving portion 62 in the longitudinal direction. As illustrated in FIG. 3, the transmission mechanism 65 may include, for example, a screw 66 rotated by the motor 64 and a nut 67 provided on the moving portion 62 and screwed to the screw 66.

As another example of the transmission mechanism 65, a belt may be included, and the rotation of the motor 64 may be converted into the movement of the moving portion 62 in the longitudinal direction by the belt. The transmission mechanism 65 of this example includes a shaft portion that is engaged with the output shaft of the motor 64 and rotates with the rotation of the output shaft, a third pulley that is fixed to the shaft portion and rotates integrally with the shaft portion, a fourth pulley rotatably provided at the front end of the base portion 61, and a belt that is wound around the third pulley and the fourth pulley and to which the moving portion 62 is fixed.

According to the transmission mechanism 65 configured as described above, when the third pulley, the fourth pulley, and the belt 59 rotate with the rotation of the motor 64, the moving portion 62 fixed to the pair of belts moves in the longitudinal direction, and the holding portion 23 moves in the longitudinal direction via the moving portion 62.

The camera 26 is configured to be able to acquire an image of the inside of the accommodation box 81 taken out from the conveyance shelf 3 by the taking-out apparatus 11. Note that the accommodation box 81 is taken out from the conveyance shelf 3 by being held by the holding portion 23 and moved by the moving apparatus 25. The camera 26 is, for example, a camera capable of photographing information from which the position of the article 7 in the accommodation box 81 can be detected by the control apparatus included in the taking-out system 1. In addition, the camera 26 is, for example, a camera capable of photographing information from which the shape of the article 7 in the accommodation box 81 can be detected by the control apparatus included in the taking-out system 1. Alternatively, these functions may be achieved by using multiple cameras having one of these functions. The camera 26 is provided on the housing 21, and transmits data of the photographed image to a control apparatus included in the taking-out system 1. Here, in the example of the present embodiment, the control apparatus included in the taking-out system 1 includes the host system 6, the taking-out apparatus controller 28, and a picking robot controller 72 to be described later of the picking robot system 14. In the example of the present embodiment, the camera 26 transmits the data of the photographed image to the picking robot controller 72 of the station 2 in which the camera 26 is installed. Examples of the camera 26 include a depth camera and an RGB camera. The distance to the article 7 in the vertical direction can be detected from the data of the image photographed by the depth camera. The position of the article 7 in the horizontal direction can be detected from the data of the image photographed by the RGB camera. The shape of the article 7 can also be detected by the depth camera and the RGB camera. In addition, the camera 26 is controlled by, for example, the picking robot controller 72 as an example of the control apparatus included in the taking-out system 1.

As illustrated in FIG. 4, for example, one camera 26 is provided. The camera 26 is provided, for example, on the ceiling portion 33. The camera 26 includes, for example, the depth camera and the RGB camera.

The sensor 27 is configured to be able to detect that the article 7 is taken out from the accommodation box 81 by the picking robot 71. Note that the accommodation box 81 is taken out from the conveyance shelf 3 by being held by the holding portion 23 and moved by the moving apparatus 25. The sensor 27 detects, for example, that the picking robot 71 has taken out the article 7 from the accommodation box 81 and moved the accommodation box 81 to a taking-out completion height. In the example of the present embodiment, when the article 7 has moved to the taking-out completion height, it is considered that the taking-out has been completed. The taking-out completion height is a height at which the lower end of the article 7 is positioned above the upper end of the accommodation box 81. That is, the sensor 27 detects that the lower end of the article 7 has moved upward from the upper end of the accommodation box 81. The sensor 27 is, for example, a laser range finder. The sensor 27 is installed, for example, on the column portion 32 of the housing 21. The sensor 27 transmits a detection result to the picking robot controller 72 of the station 2 in which the sensor 27 is provided, which is an example of the control apparatus included in the taking-out system 1. The sensor 27 is controlled by, for example, the picking robot controller 72, which is an example of the control apparatus included in the taking-out system 1.

The taking-out apparatus controller 28 can be implemented by, for example, one computer or a combination of a plurality of computers. The taking-out apparatus controller 28 communicates with the host system 6 in a wired or wireless manner. The taking-out apparatus controller 28 controls the lifting apparatus 24 and the moving apparatus 25 by controlling the motor 54 of the lifting apparatus 24 and the motor 64 of the moving apparatus 25 based on a signal from the host system 6.

In addition, the taking-out apparatus controller 28 controls the holding portion 23, the moving apparatus 25, and the lifting apparatus 24 to control the lifting apparatus 24 to move to a predetermined height after controlling the holding portion 23 to hold the accommodation box 81 and the moving apparatus 25 to move the holding portion 23 in the longitudinal direction.

In the present embodiment, the holding portion 23 holds the accommodation box 81 by placing the accommodation box 81 on the arm 23a. That is, in the present embodiment, controlling the holding portion 23 so as to hold the accommodation box 81 means controlling the moving apparatus 25 and the lifting apparatus 24 so that the accommodation box 81 is placed on the arm 23a. In other words, in the present embodiment, the holding portion 23 is indirectly controlled by controlling the moving apparatus 25 and the lifting apparatus 24.

Note that, in a case where the holding portion 23 includes, for example, a suction pad and is configured to suck and hold the accommodation box 81 by generating a negative pressure in the suction pad using a pump, controlling the holding portion 23 means controlling the pump. Alternatively, in a case where the holding portion 23 includes a clamping portion and a driving portion that drives the clamping portion and is configured to hold the accommodation box 81 by clamping the accommodation box 81 with the clamping portion, controlling the holding portion 23 means controlling the driving portion. As described above, in a case where the holding portion 23 includes the driving portion such as the pump or the motor, controlling the driving portion means controlling the holding portion 23.

As illustrated in FIG. 2, the picking robot system 14 is configured to take out the article 7 the article 7 in the accommodation box 81 arranged at a picking position from the accommodation box 81, and convey the taken-out article 7 to the sorting box 15 corresponding to the article 7 among the plurality of sorting boxes 15. The picking robot system 14 includes, for example, the picking robot 71 and the picking robot controller 72.

The picking robot 71 is, for example, a multi-axis robot capable of detachably holding the article 7. The picking robot 71 is arranged, for example, in the vicinity of the taking-out apparatus 11 on a floor surface on which the station 2 is installed, as illustrated in FIG. 1.

The picking robot 71 is arranged in the vicinity of the end opposite to the column portion 32 in the width direction. By arranging the picking robot 71 at this position, the picking robot 71 can move the article 7 to the sorting box 15 with a short distance without interfering with the column portion 32. Alternatively, as indicated by a two-dot chain line in FIG. 2, the picking robot 71 may be arranged on the opposite side of the column portion 32 in the width direction with respect to the taking-out apparatus 11. Also when arranged at this position, the picking robot 71 can convey the article 7 to the sorting box 15 at a short distance without interfering with the column portion 32.

The picking robot controller 72 can be implemented by, for example, one computer or a combination of a plurality of computers. The picking robot controller 72 communicates with the host system 6 in a wired or wireless manner. The picking robot controller 72 controls the picking robot 71 based on a signal from the host system 6.

In addition, the picking robot controller 72 detects the shape of the article 7 and the position of the article 7 from, for example, the image data received from the camera 26. Here, the position of the article 7 is the position of the article 7 in the horizontal direction and the position of the article 7 in the vertical direction.

In addition, the picking robot controller 72 detects that the taking-out of the article 7 has been completed by the picking robot 71 based on a signal from the sensor 27.

In addition, the picking robot controller 72 controls the camera 26 and the sensor 27. The picking robot controller 72 is an example of the control apparatus that controls the camera 26. The picking robot controller 72 is an example of the control apparatus that controls the sensor 27.

The plurality of sorting boxes 15 illustrated in FIG. 2 are installed, for example, on the floor surface on which the station 2 is installed, on the opposite side of the column portion 32 of the housing 21 with respect to both the taking-out apparatus 11 and the picking robot 71. The plurality of sorting boxes 15 are arranged, for example, in the longitudinal direction.

As illustrated in FIG. 3, the conveyance shelf 3 is configured to be able to arrange the plurality of accommodation boxes 81 in the vertical direction. The conveyance shelf 3 is configured to be movable by the automatic guided vehicle 4. The conveyance shelf 3 includes, for example, the plurality of accommodation boxes 81 and a conveyance shelf body 82 accommodating the plurality of accommodation boxes 81.

The plurality of accommodation boxes 81 are placed on an upper surface 89 of the shelf plate portion 86 of the conveyance shelf body 82. The plurality of accommodation boxes 81 are configured to be able to accommodate the article 7 therein. The accommodation box 81 is configured such that the article 7 can be taken out by the picking robot 71 from above. The accommodation box 81 is formed in, for example, a rectangular accommodation box shape whose upper end is opened.

The conveyance shelf body 82 is configured such that the accommodation box 81 can be taken in and out along a direction of the movement of the holding portion 23 by the moving apparatus 25. The conveyance shelf body 82 includes, for example, a shelf bottom plate 83, a leg portion 84, a support member 85, and a plurality of shelf plate portions 86.

The shelf bottom plate 83 forms a shelf bottom 83a in contact with the automatic guided vehicle 4. The shape of the leg portion 84 with respect to the shelf bottom plate 83 is appropriately formed. The leg portion 84 extends downward from, for example, a corner portion of the shelf bottom 83a of the shelf bottom plate 83. The length of the leg portion 84 (a height below the shelf (a height from the floor surface to the shelf bottom 83a of the shelf bottom plate 83)) is slightly longer than the minimum height of the automatic guided vehicle 4. That is, the leg portion 84 has a height allowing the automatic guided vehicle 4 to be arranged. The leg portions 84 are separated from each other by a length allowing the automatic guided vehicle 4 to be arranged below the shelf bottom plate 83 between the leg portions 84. Therefore, the automatic guided vehicle 4 can go under the shelf of the conveyance shelf 3 between the leg portions 84 of the conveyance shelf 3.

In the present embodiment, an example will be described in which four or more leg portions 84 extend downward from the shelf bottom 83a at the corner portions of the shelf bottom plate 83 so that the conveyance shelf 3 stably stands upright on the floor surface. There may be three leg portions 84 as long as the conveyance shelf 3 stably stands on the floor surface. Five or more legs 84 are also preferable.

The support member 85 is fixed to the shelf bottom plate 83. The plurality of shelf plate portions 86 are fixed to the support member 85. In the present embodiment, for example, four support members 85 are used. As illustrated in FIG. 6, the four support members 85 are provided at respective four corner portions of the shelf bottom 83a. The four support members 85 are, for example, members that are formed in an L shape in cross section and are long in one direction.

The space between the pair of back support members 85 and the space between the pair of front support members 85 have a width allowing the accommodation box 81 to pass therethrough.

The plurality of shelf plate portions 86 are arranged on the support member 85 apart from each other in the vertical direction. The separation interval between the plurality of shelf plate portions 86 may be an equal distance, or may also be an appropriate distance. The four corner portions of the plurality of shelf plate portions 86 are fixed to the four support members 85. The shelf plate portion 86 has a size allowing one or a plurality of accommodation boxes 81 to be placed. In the example of the present embodiment, as illustrated in FIGS. 2 and 6, the shelf plate portion 86 is formed in a rectangular plate shape having a size allowing two accommodation boxes 81 to be arranged in the longitudinal direction.

As illustrated in FIGS. 7 and 8, grooves 87 in which the arms 23a of the holding portion 23 can be arranged are formed in the same number as the arms 23a on the upper surface 89 of the shelf plate portion 86. The groove 87 is formed by arranging rod members 88b extending in the longitudinal direction on the shelf plate portion 86 at predetermined intervals in the width direction. The groove 87 between the rod members 88b is formed so that the arm 23a of the holding portion 23 can be inserted thereinto. The back end of the groove 87 is opened. The depth of the groove 87 with respect to the upper surface 89 of the shelf plate portion 86 is set to a dimension longer than the thickness of the arm 23a.

The groove 87 has a length allowing the arm 23a to be inserted into a position where the accommodation box 81 can be stably placed on the arm 23a. For example, the groove 87 has a length allowing the arm 23a to enter until the stopper 23b makes contact with the accommodation box 81. The width of the groove 87 is set to be larger than the width of the arm 23a. The width of the groove 87 has a movement margin that allows the holding portion 23 to be moved in the width direction in a state where all the arms 23a are inserted into all the grooves 87.

The groove 87 configured as described above may be formed by, for example, fixing a plurality of rod members 88b to a plate member 88a. Alternatively, the groove 87 may be formed by performing cutting or the like on the upper surface 89 of the shelf plate portion 86.

As illustrated in FIG. 3, the automatic guided vehicle 4 is configured to be able to move the conveyance shelf 3. The automatic guided vehicle 4 is, for example, a self-propelled robot including a shelf lift mechanism 91 and wheels 92.

The shelf lift mechanism 91 includes a top plate 91a and a driving portion 91b that pushes up the top plate 91a. When the driving portion 91b extends upward, the top plate 91a is pushed up. When the driving portion 91b contracts, the top plate 91a is lowered.

The automatic guided vehicle 4 moves to a collection position (for example, immediately below the conveyance shelf 3) corresponding to the target conveyance shelf 3 based on a control signal from the automatic guided vehicle controller 5, collects the target conveyance shelf 3 at the collection position, and travels toward an arrangement position of the conveyance shelf 3. The automatic guided vehicle 4 arranges the target conveyance shelf 3 at the arrangement position of the target conveyance shelf 3 based on the control signal from the automatic guided vehicle controller 5.

The automatic guided vehicle controller 5 can be implemented by, for example, one computer or a combination of a plurality of computers. The automatic guided vehicle controller 5 communicates with the host system 6 in a wired or wireless manner to control the automatic guided vehicle 4.

The host system 6 acquires information on the article 7 to be taken out from an external apparatus. The host system 6 can be implemented by, for example, one computer or a combination of a plurality of computers. The host system 6 communicates with the taking-out apparatus controller 28 and the automatic guided vehicle controller 5 in a wired or wireless manner, and controls the taking-out apparatus 11 and the automatic guided vehicle 4.

In addition, the host system 6 stores, for example, article information regarding an article such as the article 7, shelf information regarding the conveyance shelf 3 accommodating one or a plurality of articles, AGV information regarding the automatic guided vehicle 4, map data of the station 2, and the like. The article information includes article identification information (ID) and the like, and the article ID is assigned to each article. The shelf information includes a shelf ID and the like, and the shelf ID is assigned to each conveyance shelf 3. The AGV information includes an AGV-ID and the like, and the AGV-ID is assigned to each automatic guided vehicle 4.

The taking-out apparatus controller 28, the picking robot controller 72, the automatic guided vehicle controller 5, and the host system 6 described above each include a control unit and a storage unit. The control unit is, for example, a processor. The processor includes, for example, a central processing unit (CPU). The storage unit is, for example, a memory or a storage. The memory includes a read only memory (ROM) that is a read-only data memory or a random access memory (RAM) that temporarily stores data. The storage may be a mass storage such as a hard disk drive (HDD) or a solid state drive (SSD). The memory or the storage stores a control program and various data. The processor performs various processing based on a program or the like stored in the memory or the storage. That is, the processor executes various programs as a software function unit. As the control unit, an application specific integrated circuit (ASIC), a field programmable gate array (FPGA), or the like serving as a hardware functional unit may be used instead of the CPU.

As described above, in the example of the present embodiment, the control apparatus that controls the taking-out system 1 includes the host system 6, the automatic guided vehicle controller 5, the taking-out apparatus controller 28, and the picking robot controller 72.

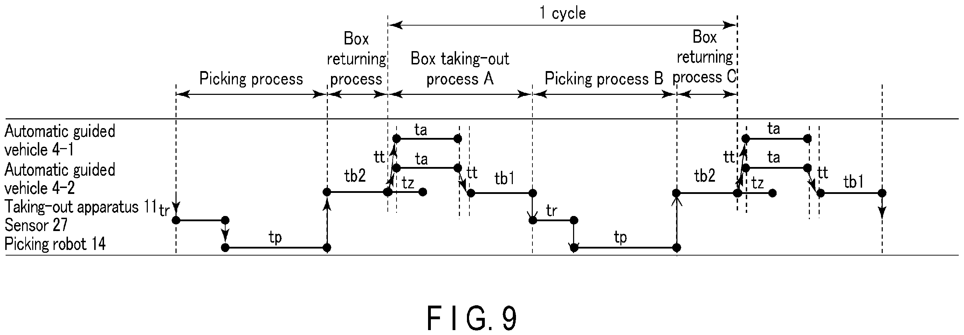

Next, an example of an operation of the taking-out system 1 will be described with reference to FIG. 9. FIG. 9 is a time chart illustrating the example of the operation of the taking-out system 1. As illustrated in FIG. 9, the taking-out system 1 repeats a predetermined cycle. This cycle includes, for example, a box taking-out process A, a picking process B, and a box returning process C. These processes A, B, and C are performed in order.

In the box taking-out process A, the taking-out apparatus 11 takes out the accommodation box 81 from the conveyance shelf 3, and moves the taken-out accommodation box 81 to the picking position.

In the picking process B, the host system 6 detects the shape and position of the article 7 to be taken out in the accommodation box 81 at the pick height based on the image photographed by the camera 26. Then, the picking robot controller 72 controls the picking robot 71 based on the signal from the host system 6 to take out the article 7 to be taken out in the accommodation box 81.

In the box returning process C, the taking-out apparatus 11 returns the accommodation box 81 to the conveyance shelf 3 and then moves the holding portion 23 to the initial position.

In FIG. 9, "ta" is a time for replacing the automatic guided vehicle 4. The replacement of the automatic guided vehicle 4 will be described. In the present embodiment, as illustrated in FIG. 2, for example, two conveyance shelves 3 are arranged in front of the taking-out apparatus 11. One conveyance shelf 3 is a shelf accommodating the article 7 to be taken out, and the other conveyance shelf 3 is a shelf accommodating the article 7 to be taken out next. Then, the one conveyance shelf 3 is arranged immediately before the taking-out apparatus 11, and the other conveyance shelf 3 is arranged at a position shifted in the width direction. Replacing the automatic guided vehicle 4 means returning, by the automatic guided vehicle 4, the one conveyance shelf 3 for which the taking-out of the article 7 has been completed to the arrangement position where the plurality of conveyance shelves 3 are arranged, moving, by the automatic guided vehicle 4, the other conveyance shelf 3 to immediately in front of the taking-out apparatus 11, and furthermore, moving, by the automatic guided vehicle 4, the conveyance shelf 3 accommodating the next article 7 to be taken out to the front of the taking-out apparatus 11 from the arrangement position where the plurality of conveyance shelves 3 are arranged.

"tb1" is a time for a process in which the taking-out apparatus 11 takes out the accommodation box 81 from the conveyance shelf 3. "tb2" is a time for a process in which the taking-out apparatus 11 returns the accommodation box 81 to the conveyance shelf 3.

"tr" is a time for a process in which the host system 6 detects the shape of the article 7 to be taken out and the position of the article 7 to be taken out in the accommodation box 81 based on the image photographed by the camera 26. "tp" is a time for the picking robot 71 to take out the article 7 from the accommodation box 81. "tz" is a time for the taking-out apparatus 11 to move the holding portion 23 to the height of the accommodation box 81 accommodating the article 7 to be taken out.

An automatic guided vehicle 4-1 is the automatic guided vehicle 4 that moves the one conveyance shelf 3 accommodating the article 7 to be taken out. An automatic guided vehicle 4-2 is the automatic guided vehicle 4 that moves the other conveyance shelf 3 accommodating the next article 7 to be taken out.

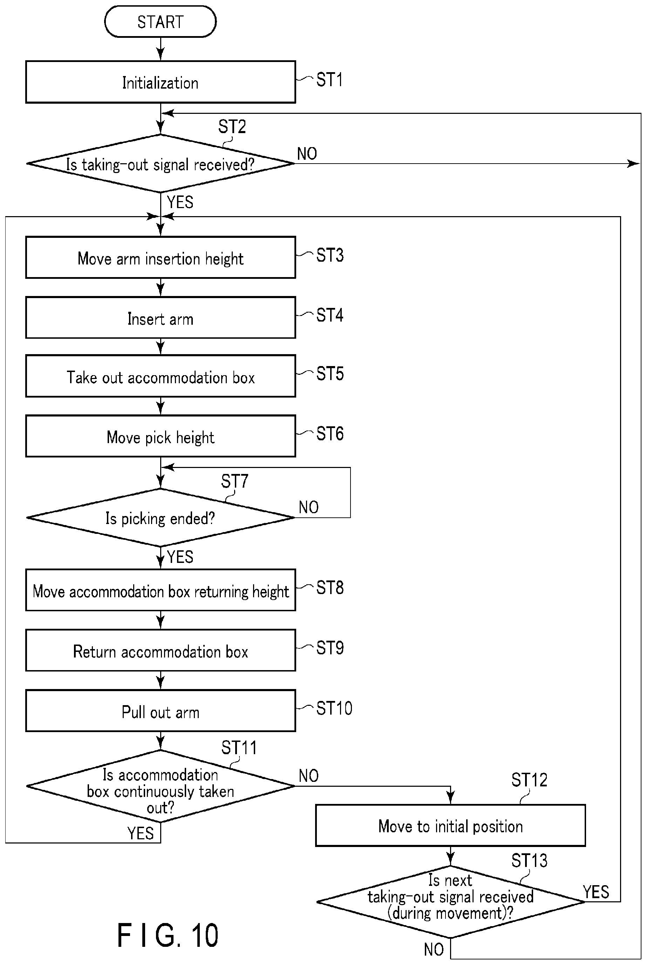

Next, the example of one cycle of the operation of the taking-out system 1 will be described with reference to FIG. 10. FIG. 10 is a flowchart illustrating the example of the operation of each of the taking-out apparatus 11, the host system 6, and the picking robot system 14.

As illustrated in FIG. 10, first, the taking-out apparatus controller 28 of the taking-out apparatus 11 initializes information on the height of the movement destination of the holding portion 23 and the like stored in the memory before starting the operation of one cycle (step ST1).

Next, the taking-out apparatus controller 28 waits until receiving a taking-out signal from the host system 6 (step ST2 - NO). Here, the taking-out signal includes information on the height of the accommodation box 81 accommodating the article 7 to be taken out. For example, the taking-out signal may be information of one article 7, or may be information on a plurality of articles 7 and an order of taking out the plurality of articles 7.

When receiving a signal for taking out the article 7 from the conveyance shelf 3 from the host system 6 (step ST2 - YES), the taking-out apparatus controller 28 starts the box taking-out process A.

Specifically, the taking-out apparatus controller 28 controls the lifting apparatus 24 to move the arm 23a of the holding portion 23 to an arm insertion height (step ST3). The arm insertion height is a height at which the arm 23a of the holding portion 23 can be inserted into the groove 87 of the shelf plate portion 86 on which the accommodation box 81 to be taken out is placed when the moving apparatus 25 moves the arm 23a of the holding portion 23 forward. The arm insertion height is a position where the upper surface of the arm 23a is lower than the lower surface of the accommodation box 81. Therefore, the arm 23a does not make contact with the accommodation box 81.

Next, the taking-out apparatus controller 28 controls the moving apparatus 25 to move the holding portion 23 forward, thereby inserting the arm 23a into the groove 87 of the shelf plate portion 86 on which the accommodation box 81 to be taken out is placed (step ST4). The arm 23a is inserted into the groove 87, for example, until the stopper 23b makes contact with the accommodation box 81.

Next, the taking-out apparatus controller 28 controls the lifting apparatus 24 and the moving apparatus 25 to take out the accommodation box 81 (step ST5). Specifically, by controlling the lifting apparatus 24, the holding portion 23 is moved upward to place the accommodation box 81 on the arm 23a, and further, the accommodation box 81 is moved upward until separated from the shelf plate portion 86. Then, the taking-out apparatus controller 28 controls the moving apparatus 25 to move the holding portion 23 and the accommodation box 81 backward to take out the accommodation box 81 from the conveyance shelf body 82.

Next, the taking-out apparatus controller 28 controls the lifting apparatus 24 to move the accommodation box 81 to the pick height (step ST6). When the taking-out apparatus 11 performs steps ST3 to ST6 in this manner, the box taking-out process A is completed. When the box taking-out process A is completed, the taking-out apparatus controller 28 transmits a signal indicating that the box taking-out process A has been completed to the host system 6.

When receiving the signal indicating that the box taking-out process A has been completed from the taking-out apparatus controller 28, the host system 6 starts the picking process B together with the picking robot system 14.

In the picking process B, the host system 6 transmits a picking start signal to the picking robot controller 72. When receiving the signal from the host system 6, the picking robot controller 72 controls, for example, the camera 26 to perform photographing with the camera 26. Then, based on the image photographed by the camera 26, the shape of the article 7 to be taken out in the accommodation box 81 arranged at the pick height is detected, and the position of the article 7 is detected.

When receiving the picking start signal from the host system 6, the picking robot controller 72 starts the picking process (step ST7). Specifically, the picking robot controller 72 controls the picking robot 71 to move the article 7 in the accommodation box 81 arranged at the pick height upward.

When detecting that the article 7 has been taken out from the accommodation box 81 based on the detection result of the sensor 27, the host system 6 determines that the picking process B for the article 7 has been completed (step ST7 - YES), and transmits a signal for starting the box returning process C to the taking-out apparatus controller 28.

When receiving the signal for starting the box returning process C from the host system 6, the taking-out apparatus controller 28 starts the box returning process C. Specifically, the taking-out apparatus controller 28 controls the lifting apparatus 24 to move the accommodation box 81 to an accommodation box return height (step ST8). The accommodation box return height is a position where the lower surface of the article 7 held by the holding portion 23 is higher than the upper surface of the shelf plate portion 86 on which the accommodation box 81 was placed.

Next, the taking-out apparatus controller 28 controls the moving apparatus 25 to return the accommodation box 81 to the shelf plate portion 86 (step ST9). Specifically, the taking-out apparatus controller 28 controls the moving apparatus 25 to move the holding portion 23 and the article 7 above the shelf plate portion 86, and then controls the lifting apparatus 24 to place the accommodation box 81 on the shelf plate portion 86 and lower the holding portion 23 until the arm 23a is separated from the lower surface of the accommodation box 81.

Next, the taking-out apparatus controller 28 controls the moving apparatus 25 to pull out the arm 23a of the holding portion 23 from the groove 87 (step ST10).

Next, in a case where the accommodation box 81 is continuously taken out (step ST11 - YES), the taking-out apparatus controller 28 returns to step ST3. For example, in a case where the taking-out apparatus controller 28 has received the information on the plurality of articles 7 and the order of taking out the plurality of articles 7 as the taking-out signal in step ST2, and in a case where the article 7 accommodated in different accommodation box 81 is continuously taken out, the accommodation box 81 is continuously taken out.

When the accommodation box 81 is not continuously taken out (step ST11 - NO), the taking-out apparatus controller 28 controls the lifting apparatus 24 to return the holding portion 23 to the initial position (step ST12). In this manner, the box returning process C is completed by performing steps ST8 to ST11. In this manner, the taking-out system 1 completes one or a plurality of cycles of the box taking-out process A, the picking process B, and the box returning process C.

When receiving a signal for taking out the next article 7 from the host system 6 during the box returning process C (step ST13 - YES), the taking-out apparatus controller 28 returns to the next box taking-out process A (step ST3).

When the signal for taking out the next article 7 has not been received (step ST13 - NO), the taking-out apparatus controller 28 returns to step ST2 and waits until receiving the signal for taking out the next article 7 from the host system 6.

In this manner, the process of taking out the article 7 from the accommodation box 81 and conveying the article 7 to the sorting box 15 is completed.

As illustrated in the time chart of FIG. 9, the operation in which the taking-out apparatus 11 moves the holding portion 23 to the height position of the accommodation box 81 accommodating the article 7 to be taken out in the box taking-out process A, and the replacement operation of the automatic guided vehicle 4 (replacement of AGV 11, AGV 12, and another automatic guided vehicle 4 at the arrangement position) by the host system 6 are performed in parallel. After moving the holding portion 23 to the height position of the accommodation box 81 accommodating the article 7 to be taken out, the taking-out apparatus 11 waits until the replacement operation of the automatic guided vehicle 4 is completed.

According to the taking-out system 1 configured as described above, the taking-out apparatus 11 takes out the accommodation box 81 accommodated in the conveyance shelf 3 from the conveyance shelf 3. This allows the article 7 in the accommodation box 81 to be taken out by the picking robot 71, and thus the picking robot 71 can be used to convey the article 7 from the conveyance shelf 3 to the sorting box 15, which is an example of the conveyance destination. Therefore, the conveyance of the article 7 can be efficiently performed. In addition, since the accommodation box 81 is taken out from the conveyance shelf 3 by the taking-out apparatus 11, the shape and position of the article 7 to be taken out in the accommodation box 81 can be easily detected by a camera or the like.

In addition, since the taking-out apparatus 11 that takes out the accommodation box 81 from the conveyance shelf 3 is configured independently of the picking robot system 14, the existing picking robot system 14 can be used. Therefore, the manufacturing cost of the taking-out system 1 can be reduced.

Furthermore, since the holding portion 23 includes the arm 23a and is configured to hold the accommodation box 81 by placing the accommodation box 81 on the arm 23a, the configuration of the holding portion 23 can be simplified.

Furthermore, since the station 2 includes the camera 26, the article 7 in the accommodation box 81 can be detected. Furthermore since the camera 26 is installed on the housing 21 of the taking-out apparatus 11, the housing 21 can be used as a member for installing the camera 26 in the station 2. As a result, since a member for installing the camera 26 in the station 2 is unnecessary, space in the station 2 can be saved and the manufacturing cost of the taking-out system 1 can be reduced.

Furthermore, since the station 2 includes the sensor 27, it is possible to detect that the article 7 has been taken out from the accommodation box 81. For example, the sensor 27 is a laser range finder (LRF), and may detect that the lower end of the article 7 has been moved upward from the upper end of the accommodation box 81. Furthermore, since the sensor 27 is installed on the housing 21 of the taking-out apparatus 11, the housing 21 can be used as a member for installing the sensor 27 in the station 2. As a result, since a member for installing the sensor 27 in the station 2 is unnecessary, space saving of the station 2 and the manufacturing cost of the taking-out system 1 can be reduced.

Furthermore, since the groove 87 is formed on the shelf plate portion 86 of the conveyance shelf 3, it is possible to place the accommodation box 81 on the arm 23a only by inserting the arm 23a into the groove 87 and then raising the arm 23a. Therefore, the operation of the taking-out apparatus 11 for placing the accommodation box 81 on the arm 23a can be simplified.

Furthermore, as illustrated in the time chart of FIG. 9, the taking-out system 1 can perform in parallel the replacement operation of the conveyance shelf 3 and the operation in which the lifting apparatus 24 moves the holding portion 23 to the height of the accommodation box 81 accommodating the article 7 to be taken out next. Therefore, it is possible to efficiently convey the article 7 from the conveyance shelf 3 to the sorting box 15.

As described above, according to the present embodiment, since the article 7 in the accommodation box 81 is taken out by the picking robot 71 after the accommodation box 81 is taken out from the conveyance shelf 3, the picking robot 71 can be used to convey the article 7 from the conveyance shelf 3 to the sorting box 15, which is an example of the conveyance destination.

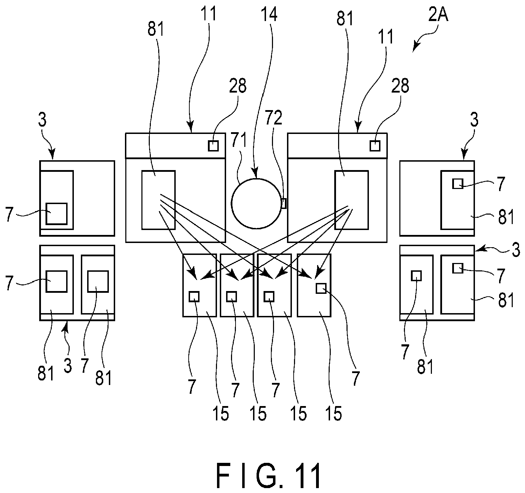

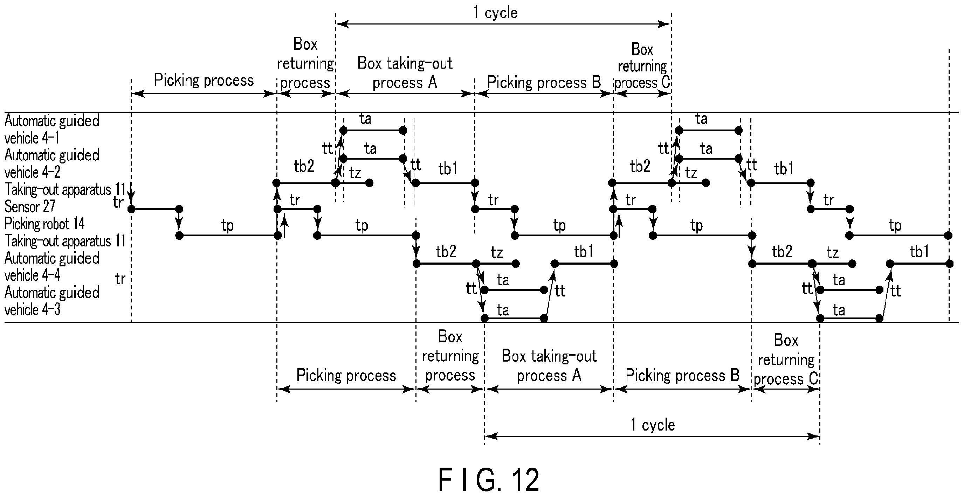

Next, a taking-out system 1A (see FIG. 1) according to a second embodiment will be described with reference to FIGS. 11 and 12. Note that, in the taking-out system 1A of the second embodiment, configurations having functions similar to those of the taking-out system 1 described in the first embodiment are denoted by the same reference numerals as those of the taking-out system 1 of the first embodiment, and description thereof is omitted.

FIG. 11 is a schematic view illustrating a part of the configuration of the taking-out system 1A. FIG. 12 is a time chart illustrating an operation of the taking-out system 1A.

As illustrated in FIG. 11, the taking-out system 1A includes, for example, a station 2A, a plurality of conveyance shelves 3, a plurality of automatic guided vehicles 4 (see FIG. 1), an automatic guided vehicle controller 5 (see FIG. 1), and a host system 6 (see FIG. 1).

The station 2A includes a plurality of taking-out apparatuses 11, a picking robot system 14, and a plurality of sorting boxes 15. The station 2A is configured by installing the plurality of taking-out apparatuses 11, the picking robot system 14, and the plurality of sorting boxes 15 in a predetermined area of a floor of a workplace such as a warehouse.

The plurality of taking-out apparatuses 11 are provided for one picking robot 71. That is, the plurality of taking-out apparatuses 11 are arranged such that an article 7 can be conveyed from an accommodation box 81 to the sorting box 15 by one picking robot system 14. In the example of the present embodiment, an example in which the station 2A includes two taking-out apparatuses 11 will be described. The picking robot 71 of the picking robot system 14 is positioned behind the two taking-out apparatuses 11.

Next, an example of the operation of the taking-out system 1A will be described with reference to FIG. 12. FIG. 12 is a time chart illustrating the operation of the taking-out system 1A.

In the taking-out system 1A, the box taking-out process A, the picking process B, and the box returning process C are set to be temporally shifted for each taking-out apparatus 11 so that the picking process B by one picking robot system 14 does not overlap among the plurality of taking-out apparatuses 11.

In the example of the present embodiment, as illustrated in FIG. 12, while the picking process B in which the picking robot system 14 picks the article 7 in the accommodation box 81 taken out by one taking-out apparatus 11 is performed, the box taking-out process A by the other taking-out apparatus 11 is performed.

The box taking-out process A and the box returning process C by the one taking-out apparatus 11, the picking process B for the one taking-out apparatus 11 by the picking robot system 14 and the host system 6, the box taking-out process A and the box returning process C by the other taking-out apparatus 11, and the picking process B for the other taking-out apparatus 11 by the picking robot system 14 and the host system 6 are performed, for example, according to the flowchart described in FIG. 10 of the first embodiment.

Note that an automatic guided vehicle 4-1 illustrated in FIG. 12 is an automatic guided vehicle 4 that moves one conveyance shelf 3 accommodating the article 7 to be taken out to the one taking-out apparatus 11, and an automatic guided vehicle 4-2 is an automatic guided vehicle 4 that moves the other conveyance shelf 3 accommodating the next article 7 to be taken out to the one taking-out apparatus 11. In addition, an automatic guided vehicle 4-3 is an automatic guided vehicle 4 that moves one conveyance shelf 3 accommodating the article 7 to be taken out to the other taking-out apparatus 11, and an automatic guided vehicle 4-4 is an automatic guided vehicle 4 that moves the other conveyance shelf 3 accommodating the next article 7 to be taken out to the other taking-out apparatus 11.

According to the taking-out system 1A, in addition to the effects of the first embodiment, it is possible to efficiently sort the article 7 into the sorting boxes 15 by operating the plurality of taking-out apparatuses 11 in parallel. As described above, according to the present embodiment, since the article 7 in the accommodation box 81 is taken out by the picking robot system 14 after the accommodation box 81 is taken out from the conveyance shelf 3, the picking robot system 14 can be used to convey the article 7 from the conveyance shelf 3 to the sorting box 15, which is an example of the conveyance destination.

Note that the taking-out system 1 and the taking-out system 1A are not limited to the first embodiment and the second embodiment, which are the above-described embodiments.

In the above-described embodiments, the configuration in which the holding portion 23 includes the arm 23a on which the accommodation box 81 is placed has been described as an example, but the configuration is not limited thereto. In another example, the holding portion 23 may not include the arm 23a.

In a case where the holding portion 23 does not include the arm 23a, the taking-out apparatus 11 includes, for example, a placement portion on which the accommodation box 81 taken out from the conveyance shelf 3 is placed. As the placement portion, for example, the base portion 61 of the moving apparatus 25 can be used.

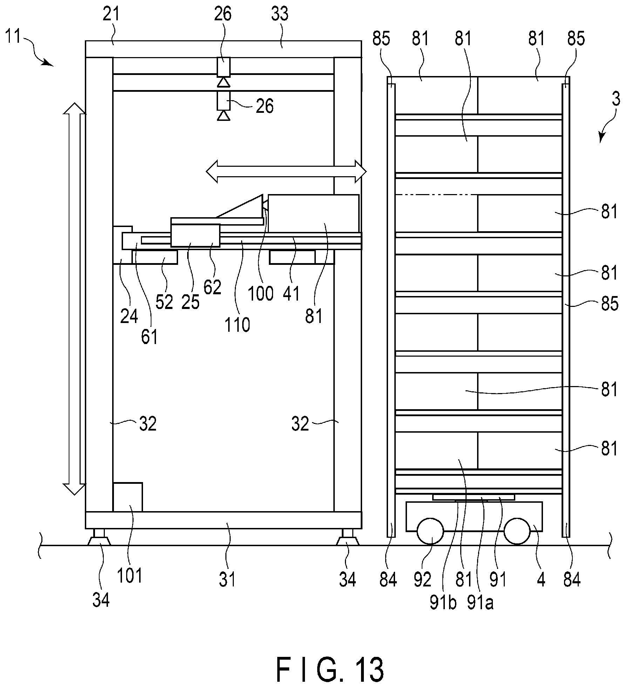

As an example, as illustrated in FIG. 13, the holding portion 23 may be configured to hold the accommodation box 81 under a negative pressure. As an example of this configuration, the holding portion 23 may include one or a plurality of cylindrical suction pads 100 having an opening at one end, and a pump 101 that generates a negative pressure in the suction pads 100. When the pump 101 generates a negative pressure in the suction pad 100 in a state where the opening of the suction pad 100 is closed by the accommodation box 81, the accommodation box 81 is fixed to the suction pad 100. Then, the accommodation box 81 held by the holding portion 23 is moved backward by the moving apparatus 25 and placed on the base portion 61 as the placement portion.

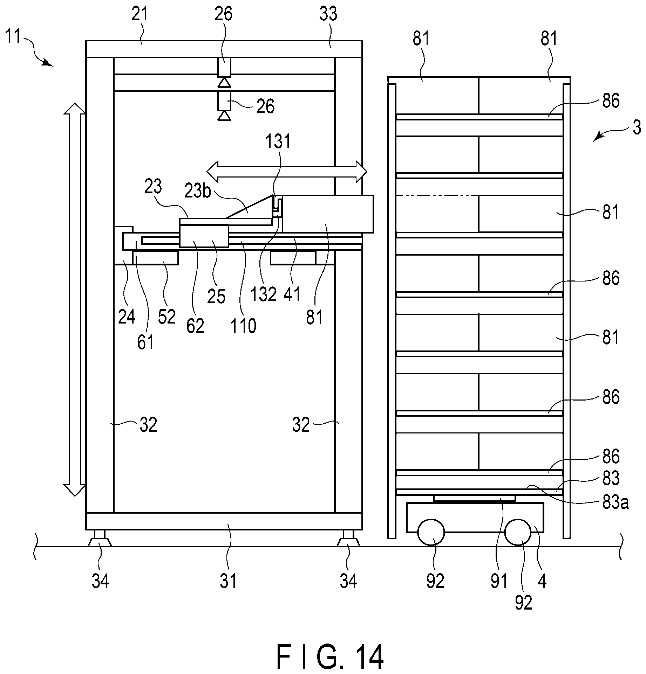

Alternatively, as illustrated in FIG. 14, the holding portion 23 may be configured to be engageable with the accommodation box 81. As an example of this configuration, for example, an engaged portion 131 is formed in the accommodation box 81, and the holding portion 23 includes an engaging portion 132 engageable with the engaged portion 131. When the engaging portion 132 engages with the engaged portion 131, the holding portion 23 holds the accommodation box 81. The accommodation box 81 held by the holding portion 23 is moved backward by the moving apparatus 25 and placed on the base portion 61 as the placement portion.

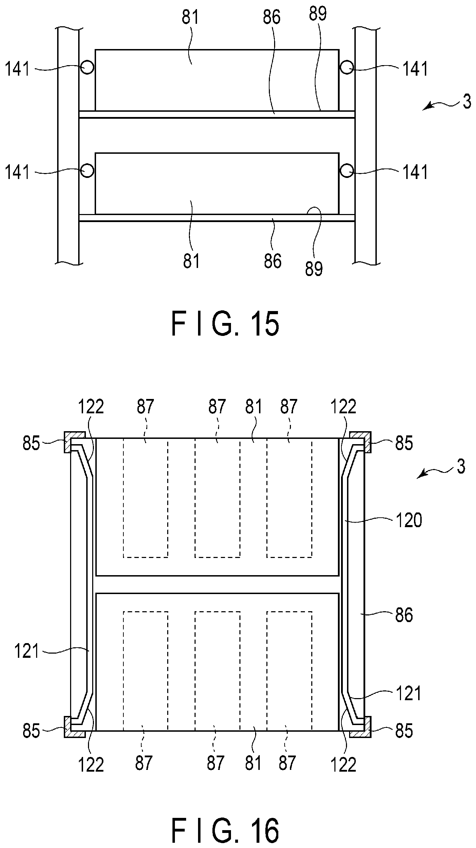

Alternatively, as illustrated in FIG. 15, the holding portion 23 may be configured to clamp the accommodation box 81 in the width direction. As an example, the holding portion 23 may include, for example, the stopper 23b and a clamping portion 141 that detachably clamps the accommodation box 81 in the width direction. As illustrated in an example in FIGS. 13 to 15, in a case where the holding portion 23 does not include the arm 23a, the shelf plate portion 86 may not include the groove 87 as illustrated in FIG. 15.

In addition, in the above-described embodiments, in a case where a rail that supports the holding portion 23 so as to be movable in the longitudinal direction is provided on the base portion 61, the configuration in which the rail is formed on the upper surface of the base portion 61 has been described as an example, but the configuration is not limited thereto. In another example, as illustrated in FIGS. 13 and 14, a rail 110 may be formed on the side surface of the base portion 61.

When the rail 110 is configured on the side surface of the base portion 61 in this manner, the upper surface of the base portion 61 can be formed in a flat surface; thus, as illustrated as an example in FIGS. 13 and 14, in a case where the base portion 61 is used as the placement portion of the accommodation box 81, the accommodation box 81 can be stably placed, which is preferable.

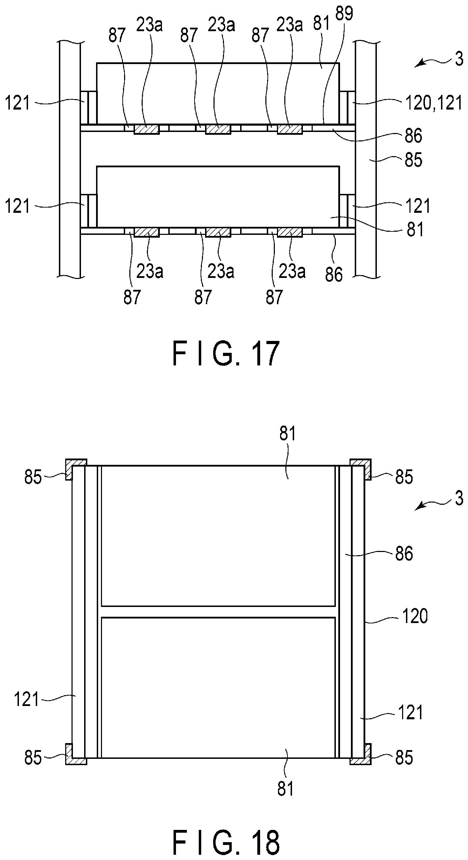

In addition, in the above-described embodiments, the shape of the groove 87 that does not penetrate the shelf plate portion 86 in the vertical direction has been described as an example, but the shape of the groove 87 is not limited thereto. In another example, as illustrated in FIGS. 16 and 17, the groove 87 may be formed in a shape penetrating the shelf plate portion 86 in the vertical direction.

In addition, the conveyance shelf 3 may include a guide 120. The guide 120 is configured to guide the accommodation box 81 onto the shelf plate portion 86 when the accommodation box 81 is returned to the shelf plate portion 86.

For example, as illustrated in FIGS. 16 and 17, the guide 120 includes a pair of guide members 121 provided at both ends in the width direction of the shelf plate portion 86. The inner surfaces in the width direction of the back end (one end) of the pair of guide members 121 are formed as guide surfaces 122. The guide surface 122 is formed as a surface whose distance from the other guide surface 122 gradually decreases toward the front (the other end side in the uniaxial direction). The guide surface 122 may be a flat surface or a curved surface. In addition, in the configuration of FIGS. 16 and 17, the guide surfaces 122 are formed on the pair of guide members 121, but in another example, the guide surfaces 122 may be formed only on one guide member 121.

According to the guide 120 having this configuration, when the accommodation box 81 is moved forward to return to the conveyance shelf 3, the accommodation box 81 is easily returned due to the guide surface 122.

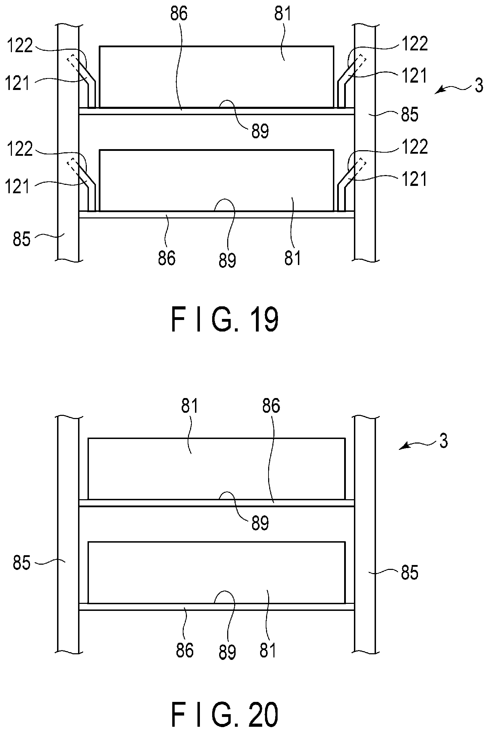

Alternatively, as illustrated in FIGS. 19 and 20, the guide surfaces 122 may be formed with the inner surfaces in the width direction of the upper ends of the pair of guide members 121. The guide surface 122 is formed in a surface whose distance from the other guide surface 122 gradually decreases downward. The guide surface 122 may be a flat surface or a curved surface. For example, in a case where the holding portion 23 holds the accommodation box 81 by clamping as illustrated in FIG. 15, when the accommodation box 81 is moved above the shelf plate portion 86 and the holding of the accommodation box 81 by the holding portion 23 is released, the accommodation box 81 is guided by the guide surface 122 of the guide 120 and placed onto the shelf plate portion 86.

In addition, in the above-described embodiments, the configuration in which the groove 87 is formed in the shelf plate portion 86 has been described as an example, but the configuration is not limited thereto. In another example, as illustrated in FIG. 20, the groove 87 may not be formed in the shelf plate portion 86.

In addition, in the above-described embodiments, the configuration in which the moving apparatus 25 can move the holding portion 23 in the longitudinal direction, which is an example of a uniaxial direction orthogonal to the vertical direction, has been described as an example, but the configuration is not limited thereto. In another example, the moving apparatus 25 may be configured to be able to move the holding portion 23 in the longitudinal direction and furthermore to be able to move the holding portion 23 in the width direction. According to this configuration, when the position of the conveyance shelf 3 with respect to the taking-out apparatus 11 is shifted in the width direction, for example, the position of the holding portion 23 can be adjusted in the width direction.

In addition, in the above-described embodiments, the control apparatus of the taking-out system 1 includes a plurality of control apparatus, and for example, a configuration including the host system 6, the automatic guided vehicle controller 5, the taking-out apparatus controller 28, and the picking robot controller 72 has been described as an example, but the control apparatus of the taking-out system 1 is not limited thereto. The taking-out system 1 may be configured by one control apparatus.

In addition, in the above-described embodiments, the configuration has been described as an example in which the camera 26 transmits the data of the photographed image to the picking robot controller 72 of the station 2 in which the camera 26 is installed as an example of the control apparatus included in the taking-out system 1, but the configuration is not limited thereto. In another example, the camera 26 may transmit the data of the photographed image to the host system 6, and the host system 6 may detect the shape of the article 7 and the position of the article 7 from the image data received from the camera 26.

In addition, the configuration has been described as an example in which the sensor 27 transmits the detection result to the picking robot controller 72 of the station 2 in which the sensor 27 is installed as an example of the control apparatus included in the taking-out system 1, but the configuration is not limited thereto. In another example, the sensor 27 may transmit the detection result to the host system 6, and the host system 6 may detect that the picking robot 71 has completed the taking-out of the article 7 based on a signal from the sensor 27.

In addition, in the above-described embodiments, the configuration in which the host system 6 stores the article information regarding an article such as the article 7, the shelf information regarding the conveyance shelf 3, the AGV information regarding the automatic guided vehicle 4, the map data of the station 2, and the like has been described as an example, but the configuration is not limited thereto. When the taking-out system 1 includes a plurality of control apparatuses, these pieces of information may be stored in at least one control apparatus, or may be stored in a distributed manner in a plurality of control apparatuses. For example, the shelf information and the map data may be stored by the automatic guided vehicle controller 5, and the remaining information may be stored by at least one of the host system 6, the taking-out apparatus controller 28, and the picking robot controller 72, which are other control apparatuses, or the remaining information may be stored in a distributed manner by other control apparatuses.

In addition, in the above-described embodiments, the configuration in which a signal is transmitted from the host system 6 to the taking-out apparatus controller 28, the taking-out apparatus controller 28 controls the taking-out apparatus 11 based on the signal, a signal is transmitted from the host system 6 to the picking robot controller 72, and the picking robot controller 72 controls the picking robot 71 based on the signal has been described as an example, but the configuration is not limited thereto.

In another example, the taking-out system 1 may further include an integrated control apparatus. The integrated control apparatus controls the taking-out apparatus controller 28 and the picking robot controller 72. The integrated control apparatus can include, for example, one or a plurality of computers. In addition, similarly to the host system 6 or the like, the integrated control apparatus includes a control unit and a storage unit. In this configuration, a signal is transmitted from the host system 6 to the integrated control apparatus, the integrated control apparatus transmits a signal to the taking-out apparatus controller 28 and the picking robot controller 72 based on the signal, the taking-out apparatus controller 28 controls the taking-out apparatus 11 based on the signal, and the picking robot controller 72 controls the picking robot 71 based on the signal.

In addition, in the above-described embodiments, the configuration in which the sensor 27 is installed on the housing 21 of the taking-out apparatus 11 has been described as an example, but the configuration is not limited thereto. In another example, the sensor 27 may be installed on the lifting portion 52 of the lifting apparatus 24 or the moving portion 62 of the moving apparatus 25. According to this configuration, the sensor 27 is moved in the vertical direction integrally with the accommodation box 81 held by the holding portion 23. Therefore, when the height detected by the sensor 27 is changed, it is only necessary to change the height position of the sensor 27 with respect to the lifting portion 52 or the height position of the sensor 27 with respect to the moving portion 62.

In addition, in the above-described embodiments, the picking robot 71 is arranged behind the taking-out apparatus 11 as illustrated in FIG. 2 in the first embodiment and as illustrated in FIG. 11 in the second embodiment, as an example in which the picking robot 71 is arranged in the vicinity of the taking-out apparatus 11. Then, the configuration in which the plurality of sorting boxes 15 are arranged on the opposite side of the column portion 32 in the width direction with respect to both the taking-out apparatus 11 and the picking robot 71 and are lined up in the longitudinal direction has been described as an example. However, the arrangement of the taking-out apparatus 11 and the plurality of sorting boxes 15 is not limited to the arrangement illustrated in FIGS. 2 and 11.

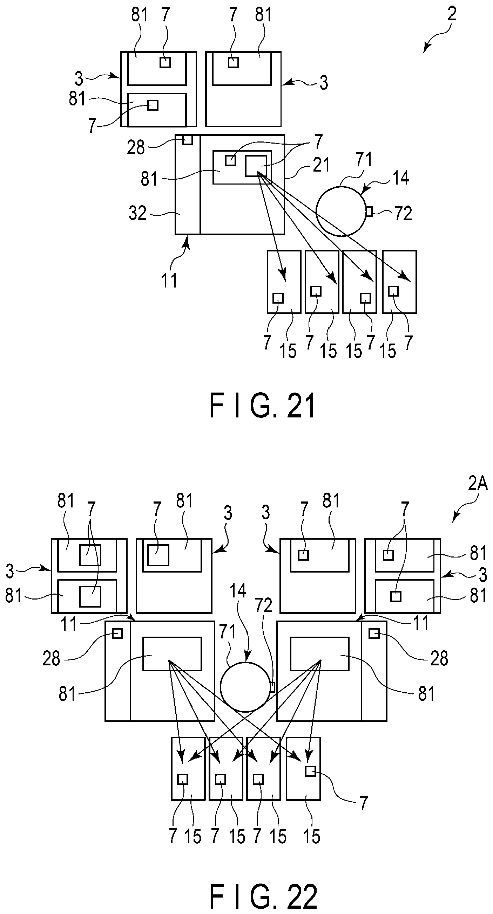

In another example, as illustrated in FIGS. 21 and 22, the picking robot 71 may be arranged on the opposite side of the column portion 32 in the width direction with respect to the taking-out apparatus 11, and the plurality of sorting boxes 15 may be arranged behind both the taking-out apparatus 11 and the picking robot 71 and lined up in the width direction. FIG. 21 is a modified example of the arrangement of the taking-out apparatus 11, the picking robot 71, and the plurality of sorting boxes 15 described in the first embodiment, and FIG. 22 is a modified example of the arrangement of the two taking-out apparatuses 11, the picking robot 71, and the plurality of sorting boxes 15 described in the second implementation liquid.

According to at least one embodiment described above, it is possible to provide the taking-out apparatus, the taking-out system, and the conveyance shelf 3 that can take out the article 7 from the conveyance shelf 3.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A taking-out apparatus comprising:
a holding portion configured to be accommodated in a conveyance shelf and configured to hold an accommodation box that accommodates an article;
a moving apparatus configured to move the holding portion in a uniaxial direction intersecting a vertical direction;
a lifting apparatus configured to move the holding portion and the moving apparatus in the vertical direction; and
a housing supporting the holding portion, the moving apparatus, and the lifting apparatus.

2. The taking-out apparatus according to claim 1, wherein the holding portion includes an arm that is configured to insert into a groove along the uniaxial direction formed on an upper surface of a shelf plate portion of the conveyance shelf on which the accommodation box is placed.

3. The taking-out apparatus according to claim 1 or 2, further comprising:
a taking-out apparatus controller configured to control the holding portion, the moving apparatus, and the lifting apparatus,
wherein the taking-out apparatus controller is configured to control the holding portion to hold the accommodation box, the moving apparatus to move the holding portion in the uniaxial direction, and then the lifting apparatus to move to a predetermined height.

4. The taking-out apparatus according to any one of claims 1 to 3, further comprising:
a camera that is provided on the housing and is configured to acquire an image of an inside of the accommodation box that has been taken out from the conveyance shelf by being held by the holding portion and moved by the moving apparatus.

5. The taking-out apparatus according to any one of claims 1 to 4, further comprising:
a sensor that is provided on the housing and is configured to detect that the article has been taken out by a picking robot from the accommodation box that has been taken out from the conveyance shelf by being held by the holding portion and moved by the moving apparatus.

6. The taking-out apparatus according to claim 5,
wherein the sensor is configured to detect that a lower end of the article has moved upward from an upper end of the accommodation box.

7. A taking-out system comprising:
an automatic guided vehicle;
a conveyance shelf including:
a shelf bottom plate forming a shelf bottom in contact with the automatic guided vehicle,
a leg portion extending downward from the shelf bottom plate and having a height allowing the automatic guided vehicle to be arranged below the shelf bottom plate,
a support member extending upward from the shelf bottom plate,
a plurality of shelf plate portions provided on the support member and arranged apart from each other in a vertical direction, and
a plurality of accommodation boxes arranged on the plurality of shelf plate portions;
the taking-out apparatus according to any one of claims 1 to 6;
a picking robot that is configured to take out an article from the accommodation box taken out from the conveyance shelf; and
a control apparatus that is configured to control the taking-out apparatus, the automatic guided vehicle, and the picking robot.

8. The taking-out system according to claim 7, wherein a plurality of the taking-out apparatuses are provided for the picking robot.

9. A conveyance shelf comprising:
a plurality of accommodation boxes;
a shelf bottom plate that forms a shelf bottom in contact with an automatic guided vehicle;
a leg portion extending downward from the shelf bottom plate and having a height allowing the automatic guided vehicle to be arranged below the shelf bottom plate;
a support member extending upward from the shelf bottom plate;
a plurality of shelf plate portions that are provided on the support member in a vertical direction and have a groove along a uniaxial direction intersecting the vertical direction on an upper surface, and on which the accommodation box is placed on the upper surface; and
a guide that is provided on the upper surface and is configured to guide the accommodation box to the upper surface.

10. The conveyance shelf according to claim 9, wherein
the guide includes a pair of guide members provided at both ends in a width direction orthogonal to the uniaxial direction of the upper surface, and
an inner surface in the width direction of one end of the pair of guide members in the uniaxial direction is formed as a guide surface in which a distance between the surfaces gradually decreases toward the other end side in the uniaxial direction.

11. The conveyance shelf according to claim 9, wherein
the guide includes a pair of guide members provided at both ends in a width direction orthogonal to the uniaxial direction of the upper surface, and
an inner surface in the width direction of an upper end of the pair of guide members is formed as a guide surface in which a distance between the surfaces gradually decreases downward.
